**Europäisches Patentamt**

**European Patent Office**

**Office européen des brevets**

(19)

(11) Veröffentlichungsnummer: **0 278 111**
**B1**

(12) ## EUROPÄISCHE PATENTSCHRIFT

(45) Veröffentlichungstag der Patentschrift:
06.06.90

(21) Anmeldenummer: 87119164.9

(22) Anmeldetag: 23.12.87

(51) Int. Cl.⁵: **B23B 31/10**

(54) Kraftbetätigtes Spannfutter.

(30) Priorität: 11.02.87 DE 3704135

(43) Veröffentlichungstag der Anmeldung:
17.08.88 Patentblatt 88/33

(45) Bekanntmachung des Hinweises auf die Patenterteilung:
06.06.90 Patentblatt 90/23

(84) Benannte Vertragsstaaten:
AT CH DE ES FR GB IT LI SE

(56) Entgegenhaltungen:
DE-A- 3 501 325
DE-A- 3 519 785

(73) Patentinhaber: Röhm, Günter Horst,
Heinrich-Röhm-Strasse 50, D-7927 Sontheim(DE)

(72) Erfinder: Röhm, Günter Horst,
Heinrich-Röhm-Strasse 50, D-7927 Sontheim(DE)
Erfinder: Pesch, Karl, Eschenweg 8,
D-8880 Dillingen/Do.(DE)

(74) Vertreter: Fay, Hermann, Dipl.-Phys. Dr. et al, Dipl.-Phys.
Hermann Fay und Dr. Joachim Dziewior
Ensingerstrasse 21 Postfach 17 67,
D-7900 Ulm/Donau(DE)

## Beschreibung

Die Erfindung betrifft ein kraftbetätigtes Spannfutter mit durch ein Antriebsglied radial verstellbaren Spannbacken, deren jede aus einer in einem Futterkörper geführten, vom Antriebsglied betätigbaren Grundbacke und einer mit der Grundbacke auswechselbar verbundenen Aufsatzbacke besteht und mindestens einen Verbindungszapfen mit zur Futterachse paralleler Zapfenachse aufweist, der drehbar um die Zapfenachse in der Grundbacke gelagert ist und je nach Drehlage die Backenverbindung zwischen der Grundbacke und der Aufsatzbacke schließt oder öffnet, und wobei mindestens eine quer zur Zapfenachse längsverschieblich in der Grundbacke geführte Steuerstange und zwischen der Steuerstange und dem Verbindungszapfen ein sie miteinander koppelndes Getriebe vorgesehen ist, das Verschiebungen der Steuerstange relativ zur Grundbacke in Verdrehungen des Verbindungszapfens und umgekehrt umsetzt.

Spannfutter dieser Art sind aus der DE-PS 35 10 457 bekannt und ermöglichen einen automatischen Wechsel der Aufsatzbacken mit Hilfe eines Backenträgers, der beim Zustellen an das Spannfutter durch Betätigen der Steuerstangen die Backenverbindung löst, die Aufsatzbacken gegen neue Aufsatzbacken auswechselt und durch erneutes Betätigen der Steuerstangen die Backenverbindung wieder schließt. Die Verbindungszapfen sind jeweils in einem Muttergewinde der Grundbacke geführt und besitzen am anderen Ende einen in einer Richtung quer zur Zapfenachse schmaleren, in der dazu senkrechten Richtung breiteren und über den Zapfenschaft auswärts vorstehende Riegelschultern bildenden Riegelkopf, der in eine Riegelaufnahme in der Aufsatzbacke greift, wobei der Riegelkopf in der dem Entriegelungszustand entsprechenden Drehlage des Verbindungszapfens axial in die Riegelaufnahme einsteckbar ist und in der dem Verriegelungszustand entsprechenden Drehlage mit seinen Riegelschultern in der Riegelaufnahme vorgesehene Hinterschneidungen axial formschlüssig hinterfaßt. Weiter besitzt der Verbindungszapfen an seinem in der Grundbacke befindlichen Teil eine Verzahnung nach Art eines Zahnritzels und die Steuerstange eine mit der Verzahnung des Verbindungszapfens kämmende Querverzahnung nach Art einer Zahnstange. Die Steuerstangen sind in tangentialer Richtung, also quer zur Futterachse und zur Verstellrichtung der jeweiligen Grundbacke, geführt und mittels im Futterkörper axial geführter und von außerhalb des Futterkörpers durch den Backenträger gegen die Kraft von Rückstellfedern betätigbarer Stößel verstellbar und stehen dazu über Keilgetriebe mit den Stößeln im Eingriff. Axiales Ein drücken der Stößel in den Futterkörper gegen die Kraft der Rückstellfedern führt daher zur Verschiebung der Steuerstangen und über die damit verbundene Verdrehung der Verbindungszapfen zu einem Ver- oder Entriegeln der Aufsatzbacken. Bei der Verdrehung des Verbindungszapfens in seiner dem Verriegeln entsprechenden Drehrichtung legen sich die Riegelschultern des Riegelkopfes hinter die Hinterschneidungen in der Riegelaufnahme und gleichzeitig verspannt sich die Aufsatzbacke gegen die Grundbacke wegen des axialen Anzuges des Verbindungszapfens in seinem Muttergewinde. Das Verdrehen der Verbindungszapfen erfordert daher umso höhere Kraft, je fester die Verbindungszapfen in ihrem Muttergewinde bereits angezogen sind, so daß im Ergebnis für die jeweils letzte Phase des Verriegelungsvorgangs bzw. für die erste Phase des Entriegelungsvorgangs besonders hoher Kraftaufwand benötigt wird, wenn die Backenverbindung in verriegelten Zustand ausreichend formstabil und kraftsteif sein soll. Diesen hohen Kraftaufwand mit Hilfe des Backenträgers zu erbringen, ist in der Praxis aufwendig und umständlich.

Der Erfindung liegt die Aufgabe zugrunde, ein Spannfutter der eingangs genannten Art so auszubilden, daß am Backenträger Betätigungs- und Kraftglieder für die Verstellung der Steuerstangen entbehrlich sind.

Diese Aufgabe wird nach der Erfindung dadurch gelöst, daß die Führung der Steuerstange in der Grundbacke parallel zur Führung der Grundbacke im Futterkörper verläuft, daß für die Steuerstange ein Steuerglied vorgesehen ist, durch das die Steuerstange gegen Verschiebungen in Bezug auf den Futterkörper feststellbar ist, und daß die Grundbacke durch ihr Antriebsglied bei festgestellter Steuerstange zum Verdrehen des Verbindungszapfens verschiebbar ist.

Durch die Erfindung wird erreicht, daß der beim Ver- bzw. Entriegeln der Backenverbindung zumindest für einen Teil des Verstellwegs der Steuerstange erforderliche hohe Kraftaufwand durch den kraftbetätigten Spannantrieb des Spannfutters selbst aufgebracht wird, indem die Grundbacke durch ihr Antriebsglied ähnlich wie bei der Innen- oder Außenspannung eines Werkstücks verstellt wird und dabei in Bezug auf ihre gegen Verschiebung festgestellte Steuerstange eine die Verdrehung des Verbindungszapfens bewirkende Relativverschiebung der Steuerstange gegenüber der Grundbacke ergibt. Im Ergebnis dient bei dem erfindungsgemäßen Spannfutter der Spannantrieb für die Spannbacken nicht nur zur Spannung des Werkstücks, sondern auch zumindest zum endgültigen Festziehen, bzw. anfänglichen Lockern des Verriegelungszustands der Backenverbindung.

Handelt es sich um ein Spannfutter, das in bekannter Weise zwei Verbindungszapfen je Spannbacke besitzt, kann sich bei nur einer einzigen Steuerstange für beide Verbindungszapfen eine mechanische Überbestimmung ergeben. Um dies zu vermeiden und beide Verbindungszapfen mit gleich großer Kraft beaufschlagen und um gleich große Winkel drehen zu können, besteht vorzugsweise die Möglichkeit, daß für jeden Verbindungszapfen eine eigene Steuerstange vorgesehen ist und daß die beiden Steuerstangen in Verschiebungsrichtung durch ein Kraftausgleichsglied miteinander gekoppelt und über das Kraftausgleichsglied durch das den beiden Steuerstangen gemeinsame Steuerglied feststellbar sind. Zweckmäßig ist das Kraftausgleichsglied als gleicharmiger Hebel ausgebildet, der an den Enden seiner Hebelarme mit den beiden Steuerstangen gelenkig verbunden und drehbar um die Hebelmitte an eine parallel zu den Steuerstangen in der Grundbacke geführte Stellstange angeschlossen ist, an der das Steuerglied angreift. Sind insbesondere die beiden Steuerstangen in noch später zu beschreibender Weise immer nur auf Druck beansprucht, ist das Kraftausgleichsglied vorzugsweise einerseits mit Drucknasen stirnseitig gegen je eine der beiden Steuerstangen und andererseits über eine seine Drehung ermöglichende Zylinderfläche gegen die Stellstange abgestützt. Sind dabei im übrigen, wie ebenfalls bekannt, die die Steuerstangen mit den Verbindungszapfen koppelnden Getriebe jeweils als Zahnritzel am Verbindungszapfen und darin eingreifende Zahnleiste an der Steuerstange ausgebildet, empfiehlt es sich, daß die beiden Steuerstangen in Richtung der Zapfenachsen unmittelbar aneinander geführt sind und je eine Längsaussparung aufweisen, die an jeder Steuerstange das jeweils nicht mit ihr im Eingriff stehende Zahnritzel über den Verstellweg der Steuerstange aufnimmt. Im Ergebnis wird eine sehr kompakte, platzsparende und besonders kraftsteife Anordnung der beiden Steuerstangen mit ihrem Kraftausgleichsglied erreicht.

Im Prinzip besteht im Rahmen der Erfindung die Möglichkeit, den für die Ver- bzw. Entriegelung der Backenverbindung insgesamt erforderlichen Verstellweg der Steuer- bzw. Stellstange allein durch eine entsprechend große Radialverstellung der Grundbacke aufzubringen. In der Praxis aber wären so große Verstellwege der Grundbacken nicht nur mit äußerst aufwendigem Spannantrieb, sondern auch mit meistens viel zu großen axialen und radialen Bauabmessungen des Spannfutters verbunden. Daher ist es besser, den üblicherweise kleinen Verstellweg der Grundbacken mehrfach nacheinander zum schrittweisen Verschieben der Steuer- bzw. Stellstangen zu nutzen und so in der Summe aller kleinen Bewegungsschritte den erforderlichen großen Stellweg für die Steuerstange bzw. Stellstange zu erhalten. Eine hierfür nach der Erfindung besonders geeignete Ausführungsform ist dadurch gekennzeichnet, daß das Steuerglied ein im Futterkörper geführter Riegel ist, der in der Verriegelungsstellung mit einem Riegelkopf form- und kraftschlüssig in Riegelaufnahmen der Steuerstange bzw. Stellstange quer zu deren Führungsrichtung eingreift. Dann kann die Grundbacke zunächst in der einen Richtung gegenüber der festgestellten Steuer- bzw. Stellstange und anschließend zusammen mit der vom Riegel wieder freigegebenen Steuer- bzw. Stellstange in der anderen Richtung bewegt werden, was bei mehrfacher Wiederholung eine in der letzteren Richtung mit der Wiederholungszahl wachsend große Verschiebung der Steuer- bzw. Stellstange gegenüber der Grundbacke ergibt. Eine hierfür in konstruktiver Hinsicht besonders bevorzugte Ausführungsform ist dadurch gekennzeichnet, daß die Steuerstange bzw. Stellstange in einer zum Futterkörper hin offenen Nut der Grundbacke geführt und auf der offenen Nutseite mit einer die Riegelaufnahmen bildenden Zahnleiste versehen ist, und daß der Riegel ein in seiner Längsrichtung kraftbetätigt hin und her verschiebbarer Bolzen ist, der an seiner der Steuerstange bzw. Stellstange zugewandten Stirn als Riegelkopf eine in die Zahnleiste passende Querverzahnung aufweist.

Anstelle dieser auch zeitaufwendigen schrittweisen Verschiebung der Steuer- bzw. Stellstange mittels vielfacher Grundbackenverstellungen ist es in der Regel besser, den Spannantrieb der Grundbacken nur zum allein hohen Kraftaufwand erfordernden Festziehen bzw. Lösen des Verriegelungszustandes der Backenverbindung zu benutzen und im übrigen, nur noch wesentlich geringere Kräfte benötigenden Verstellbereich der Steuer- bzw. Stellstange das Steuerglied zusätzlich zum Stangenantrieb heranzuziehen. Eine hierfür besonders bevorzugte Ausführungsform ist dadurch gekennzeichnet, daß das Steuerglied als ein im Futterkörper quer zur Führungsrichtung der Steuerstange bzw. Stellstange geführtes, kraftbetätigt bewegbares Stellglied ausgebildet ist, das eine sich längs seines Stellweges erstreckende Steuerkurve aufweist, die einen Anschlag für die Steuerstange bzw. Stellstange bildet und mittels der bei der Verstellung des Steuergliedes die Steuerstange bzw. Stellstange in Bezug auf die von ihrem Antriebsglied festgehaltene Grundbacke verschiebbar ist. Im übrigen sind insoweit verschiedene Ausführungsformen möglich.

So geht ein Vorschlag der Erfindung dahin, daß das Steuerglied eine Ringscheibe ist, die in einer konzentrischen Ringnut des Futterkörpers drehbar um die Futterachse gelagert ist, daß die Ringnut zu den Grundbacken hin offen ist, daß an jeder Grundbacke die Steuerstange bzw. Stellstange in einer zur Ringnut hin offenen Nut geführt ist, und daß die Ringscheibe auf ihrer den Grundbacken zugewandten Seite die Steuerkurve aufweist, der die Steuerstange bzw. Stellstange mit einem Anschlagglied anliegt. Verdrehen des Steuergliedes ergibt dann dem Verlauf der Steuerkurve entsprechende Verschiebungen der Steuer- bzw. Stellstange. Im einzelnen empfiehlt sich dabei eine Ausführungsform, die dadurch gekennzeichnet ist, daß das Steuerglied in einer vorgegebenen Drehlage einen in der Führungsrichtung der Steuerstange bzw. Stellstange verlaufenden freien Durchgang für das Anschlagglied bildet, das an diesen freien Durchgang in beiden Drehrichtungen des Steuerglieds die Steuerkurve mit je einem Kurvenzweig anschließt, von welchem der eine die Verriegelungsbewegung, der andere die Entriegelungsbewegung der Steuerstange bzw. Stellstange steuert, und daß jeder dieser beiden Kurvenzweige eine Anschlagfläche aufweist, an der die Steuerstange bzw. Stellstange in Richtung der Verriegelungsbewegung bzw. Entriegelungsbewegung der Grundbacke festgehalten ist. In der den freien Durchgang für das Anschlagglied bildenden Drehlage des Steuerglieds können die Grundbacken zur Werkstückspannung unbeeinträchtigt von dem Steuerglied, bzw. seinen Steuerkurven verstellt werden. Wird aber das Steuerglied aus dieser Drehlage verdreht, kann je nach dem Winkel der Verdrehung die Steuer- bzw. Stellstange über die Steuerkurve in der Ver- oder Entriegelungsrichtung kraftarm verschoben oder an der vom jeweiligen Kurvenzweig gebildeten Anschlagfläche festgehalten werden, um durch Betätigen der Grundbacke in der einen oder anderen Richtung kraftstark die Backenverbindung festzuziehen, bzw. die festgezogene Backenverbindung zu lösen.

Bei einer anderen bevorzugten Ausführungsform der Erfindung, die anstelle des Drehantriebs des Steuerglieds der vorbeschriebenen Ausführungsform mit einem einfacheren Axialantrieb für das Steuerglied auskommt, ist die Anordnung so getroffen, daß das Steuerglied ein im Futterkörper axial und konzentrisch geführter Steuerkolben ist, daß für jede Grundbacke zwei sich am Verbindungszapfen gegenüber liegende, sich zueinander gegenläufig bewegende Steuerstangen bzw. Stellstangen vorgesehen sind, und daß das Steuerglied für jede der beiden Steuerstangen bzw. Stellstangen eine eigene Steuerkurve aufweist, welchen die eine der beiden Steuerstangen bzw. Stellstangen nur beim Verriegelungsvorgang, die andere nur beim Entriegelungsvorgang mit jeweils ihrem radial inneren Stangenende anliegt. Dabei werden die Steuerstangen bzw. Stellstangen beim Antrieb durch das Steuerglied im Ergebnis immer nur auf Druck beansprucht, und die Ver- und die Entriegelungsbewegung der Grundbacke sind immer radial einwärts, die der Steuer- bzw. Stellstangen radial auswärts gerichtet. Um zu vermeiden, daß bei einer solchen Ausführungsform der Spannhub der Grundbacken radial einwärts durch Anschlag der Steuer- bzw. Stellstangen am Steuerglied begrenzt wird, ist darauf zu achten, daß die Steuerkurven und die von ihnen gebildeten Anschläge, welchen die jeweilige Steuerstange bzw. Stellstange bei der radial einwärts gerichteten Verriegelungsbewegung oder Entriegelungsbewegung der Grundbacke anliegt, einen radialen Abstand von der Futterachse besitzen, der überall etwas kleiner ist als der beim Werkstückspannen auftretende kleinste Abstand der Grundbacken von der Futterachse. Dann ist der Hub, den die Grundbacken zum kraftstarken Verriegeln bzw. Entriegeln der Backenverbindung ausführen müssen etwas größer als der beim Werkstückspannen größtzulässige Hub.

Eine weitere vorteilhafte Ausbildung einer solchen Ausführungsform besteht darin, daß das Steuerglied im Futterkörper mit einem radialen Verschiebungsspiel zum Kraftausgleich zwischen den Steuerstangen bzw. Stellstangen aller Grundbacken angeordnet und nur in seiner der völlig offenen Backenverbindung entsprechenden Axialstellung in eine das Radialspiel ausschaltende Zentrierbohrung im Futterkörper verschoben ist. Die Ausschaltung des Radialspiels des Steuerglieds in seiner der völlig offenen Backenverbindung entsprechenden Axialstellung hat den Zweck, sicherzustellen, daß an jeder der Grundbacken die Verbindungszapfen auch tatsächlich genau in der das axiale Abnehmen bzw. Aufsetzen der Aufsatzbacken ermöglichenden Drehlage stehen.

Im Sinne eines einfachen Betriebsablaufes beim Schließen bzw. Öffnen der Backenverbindung empfiehlt es sich im übrigen, daß der Anschlagfläche an der Steuerkurve für den Verriegelungsvorgang an der Steuerkurve für den Entriegelungsvorgang eine Ausnehmung zum freien Eintritt des ihr zugeordneten Steuer- bzw. Stellstangenendes entspricht und daß die an diese Ausnehmung anschließende Anschlagfläche der Steuerkurve um mindestens denjenigen Hub radial höher ist, den die Grundbacke zum Öffnen der Backenverbindung ausführen muß. Dann liegen die die Steuer- bzw. Stellstange jeweils haltenden Anschlagflächen beider Steuerkurven in axialer Verschiebungsrichtung des Steuerglieds dicht beieinander, so daß sein Verschiebungsweg gering ist, wenn, vom Verriegelungszustand ausgehend, die die Entriegelung bewirkende Steuer- bzw. Stellstange an der ihr zugeordneten Anschlagfläche zur Feststellung gebracht werden soll.

Im übrigen können in allen Fällen die Steuerkurven als gegen die Futterachse geneigte ebene Keilflächen ausgebildete Abschnitte aufweisen, welchen die Steuer- bzs. Stellstangenenden mit entsprechend geneigten Schrägflächen anliegen. Es werden auf diese Weise zwischen dem Steuerglied und den Steuer- bzw. Stellstangen Keilgetriebe geschaffen, die optimale Kraft- und Wegübersetzungen ermöglichen.

Im folgenden wird die Erfindung an in der Zeichnung dargestellten Ausführungsbeispielen näher erläutert; es zeigen:

Fig. 1 einen Axialschnitt durch ein Spannfutter nach der Erfindung,

Fig. 2 eine Stirnansicht des Spannfutters nach Fig. 1 von vorn, teils geschnitten längs der in Fig. 1 mit II - II bezeichneten Linie,

Fig. 3 das in Fig. 1 mit III bezeichnete Detail in gegenüber Fig. 1 vergrößerter Darstellung, und zwar in den Teilfig. 3.1 bis 3.6 in verschiedenen Betriebszuständen des Spannfutters,

Fig. 4 einen Teil der Fig. 1 in einer anderen Ausführungsform des Spannfutters,

Fig. 5 den Gegenstand der Fig. 4 in einer der Fig. 2 entsprechenden Darstellung,

Fig. 6 den Schnitt längs der Linie VI - VI in Fig. 4,

Fig. 7 einen Axialschnitt durch eine weitere Ausführungsform des erfindungsgemäßen Spannfutters,

Fig. 8 den Gegenstand der Fig. 7 in einer der Fig. 2 entsprechenden Darstellung mit in Fig. 7 eingetragener Schnittlinie VIII - VIII,

Fig. 9 den Schnitt in Richtung IX - IX in Fig. 7, und

Fig. 10 eine nochmals andere Ausführungsform des erfindungsgemäßen Spannfutters in einer den Fig. 2 und 8 entsprechenden Teildarstellung.

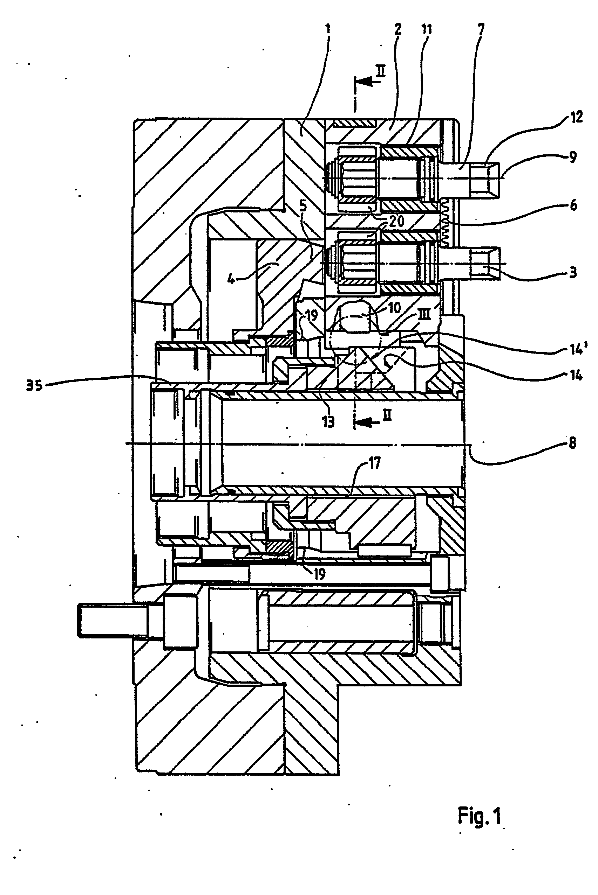

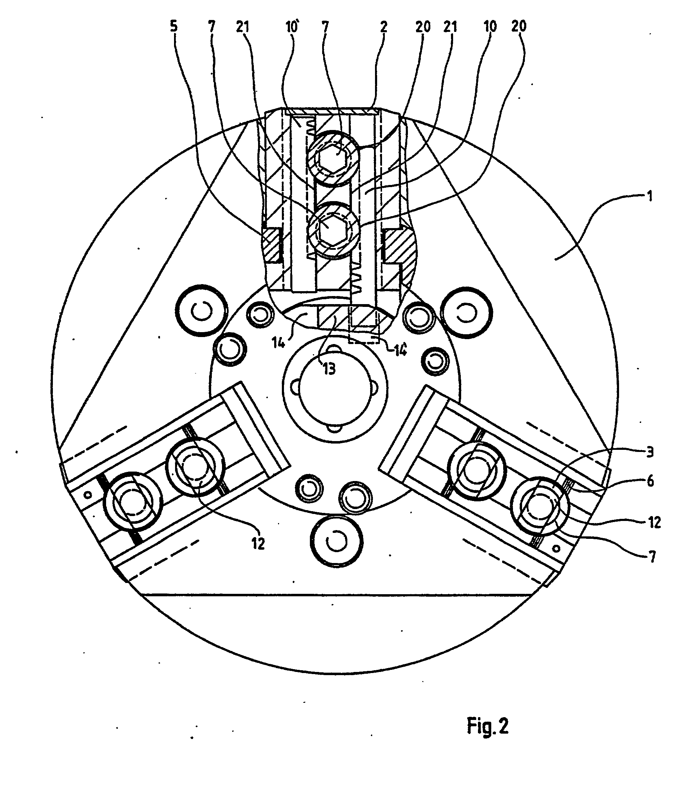

Das in den Fig. 1 und 2 dargestellte kraftbetätigte Spannfutter besitzt drei radial verstellbare Spannbacken, deren jede aus einer in einem Futterkörper 1 geführten antreibbaren Grundbacke 2 und einer an der Stirnfläche der Grundbacke 2 angeordneten, in der Zeichnung der Einfachheit wegen nicht dargestellten Aufsatzbacke besteht. Der Antrieb der Grundbacken 2 erfolgt mittels eines axial im Futterkörper 1 verstellbaren Antriebsgliedes 4 über eine Keilhakenverbindung 5 üblicher Art. Jedoch ist im Rahmen der Erfindung selbstverständlich auch jeder andere Stellantrieb für die Grundbacken 2 möglich. Die Aufsatzbacken sind, wie in im wesentlichen gleicher Weise schon in der DE-PS 35 10 457 ausführlich beschrieben, auswechselbar an den Grundbacken 2 befestigt, wobei die Grundbacken 2 und die Aufsatzbacken jeweils in einer Verzahnung 6 mit quer zur Führungsrichtung der Grundbacken 2 verlaufenden Zahnleisten im gegenseitigen Eingriff stehen. Die Verbindung zwischen der Aufsatzbacke und der Grundbacke 2 erfolgt durch zwei Verbindungszapfen 7 mit zur Futterachse 8 paralleler Zapfenachse 9. Diese Verbindungszapfen 7 sind in der Verstellrichtung der Grundbacke 2 mit Abstand nebeneinander angeordnet. Jeder Verbindungszapfen 7 ist mit seinem futterseitigen, ein Gewinde tragenden Zapfenende in einem Muttergewinde 11 der Grundbacke 2 geführt. Am anderen Ende trägt der Verbindungszapfen 7 einen Riegelkopf 12, der in zwei zueinander und zur Zapfenachse 9 senkrechten Richtungen unterschiedliche Abmessungen besitzt, in der einen Richtung also schmaler und in der anderen breiter ist und in dieser Richtung über den Zapfenschaft auswärts vorstehende Riegelschultern 3 bildet. Dieser Riegelkopf 12 greift in eine in der Aufsatzbacke vorgesehene Riegelaufnahme, wobei der Riegelkopf in der dem Entriegelungszustand entsprechenden Drehlage des Verbindungszapfens 7 axial in die Riegelaufnahme einsteckbar ist und in der dem Verriegelungszustand entsprechenden, um 90° gedrehten Drehlage mit seinen Riegelschultern 3 eine in der Riegelaufnahme vorgesehene Hinterschneidung axial formschlüssig hinterfaßt. Die Fig. 1 und 2 zeigen die Verbindungszapfen 7 in ihrer jeweils dem Verriegelungszustand entsprechenden Drehlage. Ferner besitzt jeder Verbindungszapfen 7 an seinem in der Grundbacke 2 befindlichen Teil eine Verzahnung 20 nach Art eines Zahnritzels. Quer zur Zapfenachse 9 längsverschieblich in der Grundbacke 2 geführte Steuerstangen 10, 10' besitzen eine mit der Verzahnung 20 des Verbindungszapfens 7 kämmende Querverzahnung 21 nach Art einer Zahnleiste, so daß die Verschiebung der Steuerstangen 10, 10' in ihrer Längsrichtung zu entsprechenden Drehbewegungen des Verbindungszapfens 7 führt. Werden die Verbindungszapfen 7 in die Ver riegelungsstellung gedreht, erfahren sie über ihr Gewinde 11 einen axialen Anzug, durch den die Aufsatzbacke axial gegen die Grundbacke 2 gezogen wird. Gleichzeitig wird das Drehmoment für das Verdrehen der Verbindungszapfen 7 in die endgültige Verriegelungsstellung entsprechend dem axialen Anzug erheblich größer, als bei noch oder schon lockeren Verbindungszapfen zu deren kraftarmen Verdrehen erforderlich ist.

Die Führung der Steuerstangen 10, 10' verläuft in der Grundbacke 2 parallel zur Führung der Grundbacke 2 im Futterkörper 1. Für die Steuerstangen 10, 10' ist ein Steuerglied 13 vorgesehen, durch das die Steuerstangen 10, 10' gegen Verschiebungen in Bezug auf den Futterkörper 1 festgestellt werden können. Die Grundbacken 2 sind durch ihr Antriebsglied 4 auch bei festgestellten Steuerstangen 10, 10' zum Verdrehen der Verbindungszapfen 7 verschiebbar. Im Ergebnis kann der Spannhub der Grundbacken 2 dazu verwendet werden, bei jeweils festgestellten Steuerstangen 10, 10' durch die sich dann ergebende Relativverschiebung zwischen jeweils der Steuerstange 10, 10' und der Grundbacke 2 die Verbindungszapfen 7 kraftstark vollständig in die Verriegelungsstellung hineinzudrehen, bzw. zum Lockern der Backenverbindung aus der Verriegelungsstellung herauszudrehen.

In den Fig. 1 bis 9 ist das Steuerglied 13 ein im Futterkörper 1 quer zur Führungsrichtung der Steuerstangen 10, 10' geführtes, kraftbetätigt bewegbares Stellglied, das mindestens eine längs seines Stellweges erstreckende Steuerkurve 14 aufweist, die einen Anschlag für die Steuerstangen 10, 10' bildet und mittels der bei der Verstellung des Steuergliedes 13 die Steuerstangen 10, 10' in Bezug auf die von ihrem Antriebsglied 4 festgehaltene Grundbacke 2 verschiebbar sind.

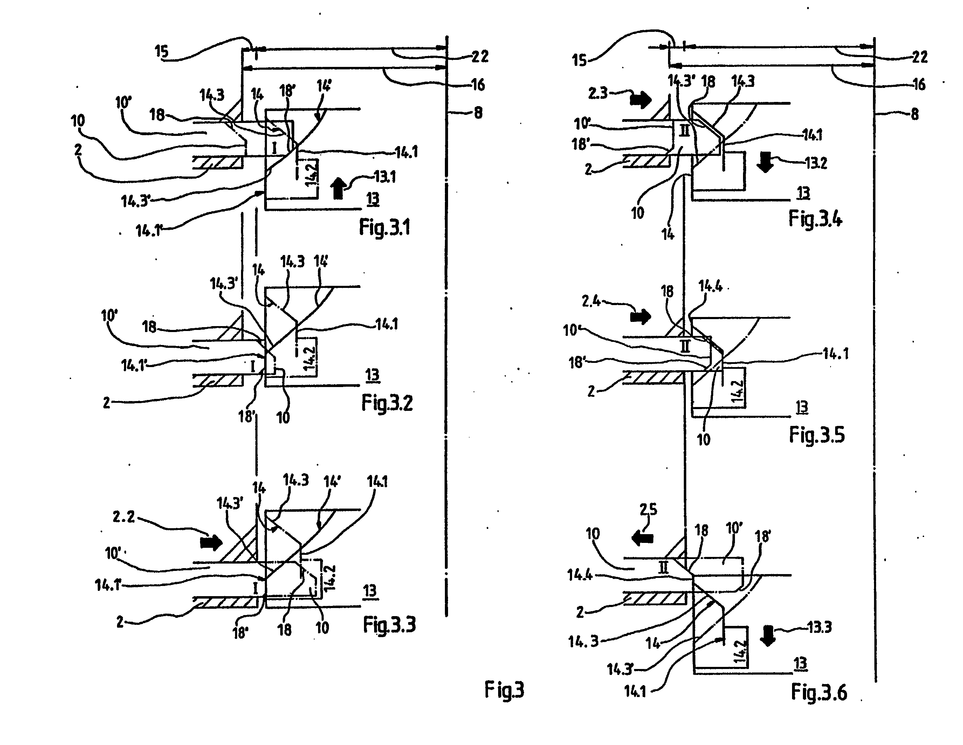

Im Ausführungsbeispiel nach den Fig. 1 bis 3 ist das Steuerglied 13 ein im Futterkörper 1 axial und konzentrisch geführter, über ein Stellrohr 35 verstellbarer Steuerkolben. Für jede Grundbacke 2 sind zwei sich am Verbindungszapfen 7 gegenüber liegende und sich zueinander gegenläufig bewegende Steuerstangen 10, 10' vorgesehen. Das Steuerglied 13 besitzt für jede der beiden Steuerstangen 10, 10' eine eigene Steuerkurve 14, 14'. Diesen Steuerkurven 14, 14' liegt die eine Steuerstange 10' nur beim Verriegelungsvorgang, die andere Steuerstange 10 nur beim Entriegelungsvorgang mit jeweils ihrem radial inneren Stangenende an. Wie insbesondere die Fig. 3 erkennen läßt, besitzen die Steuerkurven 14, 14' und die von ihnen gebildeten Anschlagflächen 14.1, 14.1', welchen die jeweilige Steuerstange 10, 10' bei der immer radial einwärts gerichteten Verriegelungsbewegung oder Entriegelungsbewegung der Grundbacke 2 anliegt, einen radialen Abstand von der Futterachse 8, der überall, d. h. axial längs der Steuerkurven 14, 14' und des Steuerglieds 13, etwas kleiner ist als der beim Werkstückspannen auftretende kleinste radiale Abstand der Grundbacken 2 bzw. Steuerstangen 10, 10' von der Futterachse 8. In Fig. 3 ist der radial größte Abstand der Grundbacken 2 von der Futterachse 8 durch den Doppelpfeil 16, der radial kleinste Abstand durch den Doppelpfeil 22 gekennzeichnet. Der durch den Doppelpfeil 15 angedeutete Radialhub, den die Grundbacken 2 zum kraftstarken Schließen oder Öffnen der Backenverbindung ausführen müssen, ist demnach etwas größer als der größtzulässige Spannhub der Grundbacken 2. Das Steuerglied 13 ist im Futterkörper 1 mit einem radialen Verschiebungsspiel 17 zum Kraftausgleich zwischen den Steuerstangen 10, 10' aller Grundbacken 2 angeordnet und nur in seiner der völlig offenen Backenverbindung entsprechenden, also in Fig. 1 völlig zurückgezogenen Axialstellung in eine das Radialspiel ausschaltende Zentrierbohrung 19 im Futterkörper 1 verschoben. Diese Zentrierung des Steuerglieds 13 bewirkt, daß die die Entriegelung bewirkenden Steuerstangen 10 über die ihnen zugeordneten Anschlagflächen 14.4 sämtlich in übereinstimmender radialer Position stehen und damit alle Verbindungszapfen 7 vollständig in ihre der Entriegelung entsprechende Drehlage verdreht sind, so daß der Zapfenkopf 12 an den Aufsatzbacken austreten kann, die Aufsatzbacken also axial von den Verbindungszapfen 7 abgenommen, bzw. ihnen aufgesteckt werden können. Der Anschlagfläche 14.1' an der Steuerkurve 14' für den Verriegelungsvorgang entspricht an der Steuerkurve 14 für den Entriegelungsvorgang eine Ausnehmung 14.2 zum freien Eintritt des Endes der ihr zugeordneten Steuerstange 10. Die an diese Ausnehmung 14.2 anschließende Anschlagfläche 14.1 der Steuerkurve 14 ist um mindestens den dem Doppelpfeil 15 entsprechenden Hub radial höher, den die Grundbacke 2 zum Öffnen der Backenverbindung ausführen muß. Die Steuerkurven 14, 14' besitzen im übrigen Abschnitte 14.3, 14.3', die als gegen die Futterachse 8 geneigte ebene Keilflächen ausgebildet sind. Diesen Abschnitten liegen die Steuerstangen 10, 10' mit entsprechend geneigten Schrägflächen 18, 18' an.

Die Funktionsweise des in den Fig. 1 und 2 dargestellten Futters läßt sich anhand von Fig. 3 wie folgt erläutern: Die Steuerstange 10' bewirkt die Verriegelung, die Steuerstange 10 die Entriegelung. Der in Fig. 3.1 dargestellte Zustand entspricht der Entriegelungsstellung der Verbindungszapfen 7. Die zur Verriegelung dienende Steuerstange 10' ist radial nach innen verschoben und liegt an der Steuerkurve 14' an. Wird jetzt das Steuerglied 13 in Richtung des Pfeiles 13.1 axial nach vorn verschoben, wird die Steuerstange 10' radial nach außen geschoben, bis ihr Stangenende auf die Anschlagfläche 14.1' aufläuft, wie dies in Fig. 3.2 dargestellt ist. Nun wird entsprechend Fig. 3.3 die Grundbacke 2 radial einwärts verstellt, wie dies durch den Pfeil 2.2 angedeutet ist. Dadurch ergibt sich eine weitere Relativverschiebung zwischen der Steuerstange 10' und der Grundbacke 2 mit dem Ergebnis, daß die Steuerstange 10' und die Verbindungszapfen 7 vollständig in ihre dem Verriegelungszustand entsprechende Stellung verschoben bzw. verdreht werden, und zwar unter der hohen Spannkraft der Grundbacke 2. Die Grundbacke 2 kann nun mit der an ihr verriegelten Aufsatzbacke radial durch das Antriebsglied 4 zum Spannen eines Werkstücks verstellt werden, wobei der kleinste Spannradius etwas größer sein soll als der durch den Doppelpfeil 22 angedeutete Radius, bis zu dem die Grundbacken 2 auf ihrem durch den Doppelpfeil 15 angedeuteten Radialhub beim kraftstarken Schließen und Öffnen der Backenverbindung verstellbar sind. Daher können beim Spannen des Werkstücks weder die Steuerstange 10' noch die Grundbacke 2 mit ihrem jeweils radial inneren Ende am Steuerglied 13 anstoßen. - Bei diesem Verriegelungsvorgang ist die der Entriegelung dienende Steuerstange 10 in die Ausnehmung 14.2 eingetreten, wie dies in Fig. 3.3 strichpunktiert angedeutet ist. Zur Entriegelung wird zunächst die Grundbacke 2 entsprechend dem Pfeil 2.3 radial auswärts auf den größten Stellradius 16 gefahren und anschließend das Steuerglied 13 entsprechend dem Pfeil 13.2 axial soweit zurückgezogen, daß sich das Ende der Steuerstange 10 über der Anschlagfläche 14.1 befindet. Dieser Zustand ist in Fig. 3.4 dargestellt. Um nun die Verbindungszapfen 7 aus ihrem Verriegelungszustand zu lockern, wird die Grundbacke 2 entsprechend Fig. 3.5 in Richtung des Pfeiles 2.4 radial einwärts bewegt, wobei die an der Anschlagfläche 14.2 festgehaltene Steuerstange 10 stehen bleibt. Dadurch ergibt sich unter der hohen Spannkraft der Grundbacke 2 eine Relativverschiebung zwischen der Steuerstange 10 und der Grundbacke 2, die die Verbindungszapfen 7 soweit verdreht, daß deren weitere Verdrehung in die der Entriegelungsstellung entsprechende Drehlage ohne weiteren großen Kraftaufwand erfolgen kann. Zu letzterem dient wiederum das Steuerglied 13, das entsprechend Fig. 3.6 in Richtung des Pfeiles 13.3 axial weiter zurückgezogen wird, wobei die Steuerstange 10 sich weiter radial auswärts bewegt, bis sie auf der Anschlagfläche 14.4 aufsitzt. Gleichzeitig ist das Steuerglied 13 in die Zentrierbohrung 19 eingetreten, so daß alle Steuerstangen 10 der drei Grundbacken 2 radial exakt die gleiche Stellung besitzen, also die Verbindungszapfen 7 voll in den Entriegelungszustand verdreht sind. Bei diesem Entriegelungsvorgang hat sich die der Verriegelung dienende Steuerstange 10' radial einwärts verschoben, wie dies in Fig. 3.6 wiederum strichpunktiert angedeutet ist. Wird nun die Grundbacke 2 mit der Steuerstange 10 entsprechend dem Pfeil 2.5 wieder radial auswärts in die dem größten Radius 16 entsprechende Stellung bewegt, ergibt sich der in Fig. 3.1 dargestellte Ausgangszustand.

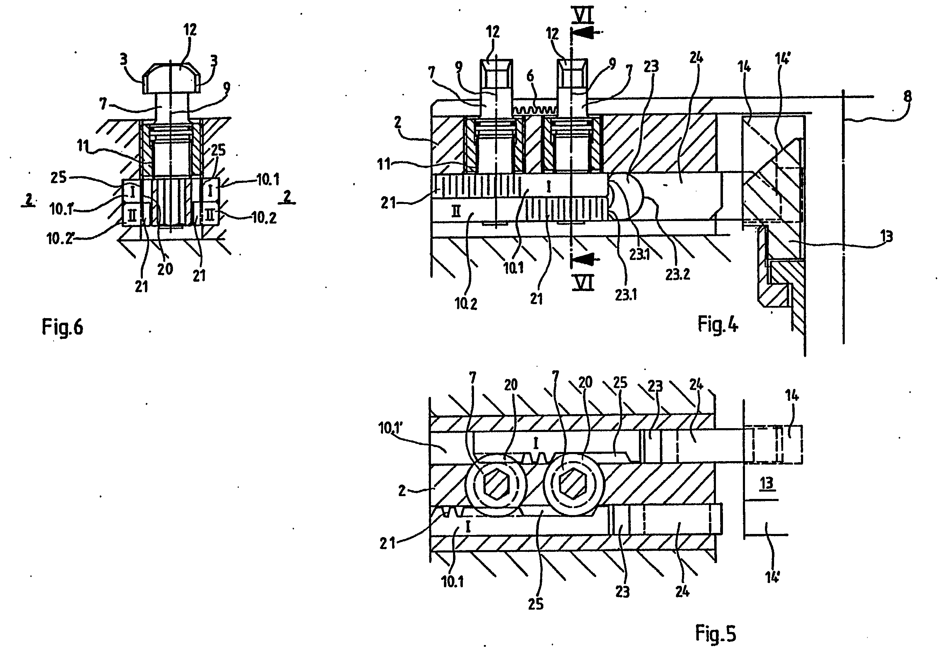

Die Ausführungsform nach den Fig. 4 bis 6 unterscheidet sich von dem eben beschriebenen Spannfutter lediglich dadurch, daß jede der Steuerstangen 10, 10' doppelt, nämlich je ein eigenes Steuerstangenpaar für jeden Verbindungszapfen 7 vorgesehen ist. Diese jeweils beiden Steuerstangen 10.1, 10.2, bzw. 10.1', 10.2' sind in Verschiebungsrichtung durch ein Kraftausgleichsglied 23 miteinander gekoppelt und nicht unmittelbar, sondern über das Kraftausgleichsglied 23 durch das den beiden Steuerstangen gemeinsame Steuerglied 13 feststellbar. Das Kraftausgleichsglied 23 ist als gleicharmiger Hebel ausgebildet, der mit den Enden seiner Hebelarme an die beiden Steuerstangen 10.1, 10.2 bzw. 10.1', 10.2' gelenkig angeschlossen ist und drehbar um die Hebelmitte an eine parallel zu den Steuerstangen in der Grundbacke 2 geführte Stellstange 24 angeschlossen ist, an der das Steuerglied 13 angreift. Da die Steuerstangen nur auf Druck beansprucht werden, ist das Kraftausgleichsglied 23 einerseits mit Drucknasen 23.1 stirnseitig gegen je eine der beiden Steuerstangen 10.1, 10.2 bzw. 10.1', 10.2' und andererseits über eine seine Drehung ermöglichende Zylinderfläche 23.2 gegen die Stellstange 24 abgestützt. Die beiden Steuerstangen 10.1, 10.2 bzw. 10.1', 10.2' sind in Richtung der Zapfenachse 9 unmittelbar aneinander geführt und mit je einer Längsaussparung 25 versehen, die an jeder Steuerstange das jeweils nicht mit ihr im Eingriff stehende Zahnritzel 20 über den Verstellweg der Steuerstange aufnimmt. Es wird auf diese Weise sicher gestellt, daß die beiden Verbindungszapfen 7 jeder Grundbacke 2 mit gleicher Kraft und vollständig bis in ihre jeweiligen, dem Verriegelungs- bzw. Entriegelungszustand entsprechende Drehlage verstellt werden.

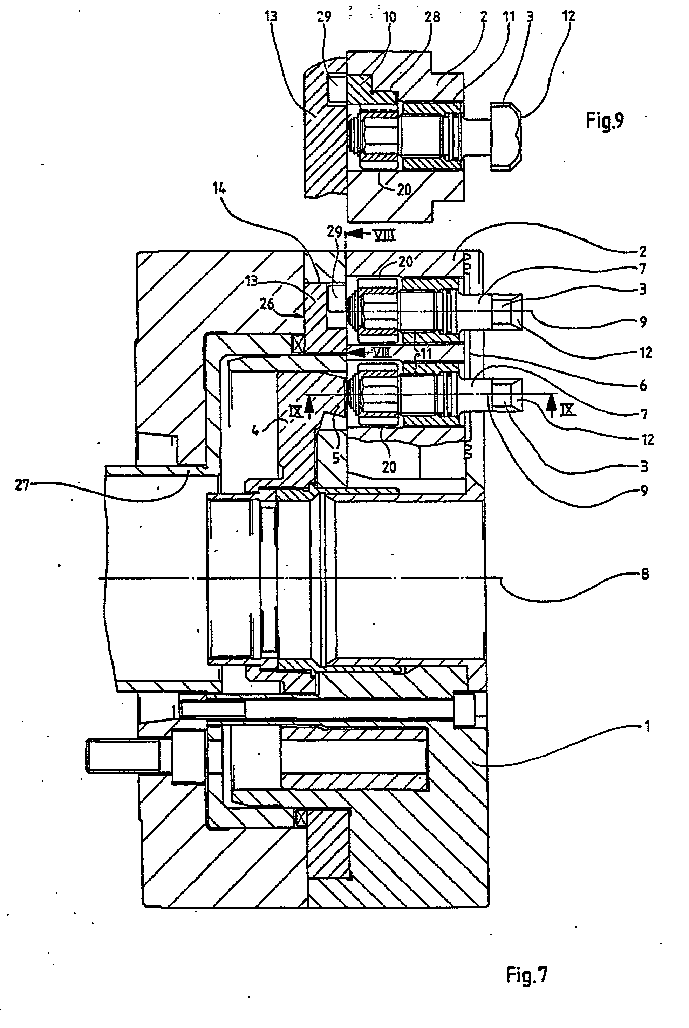

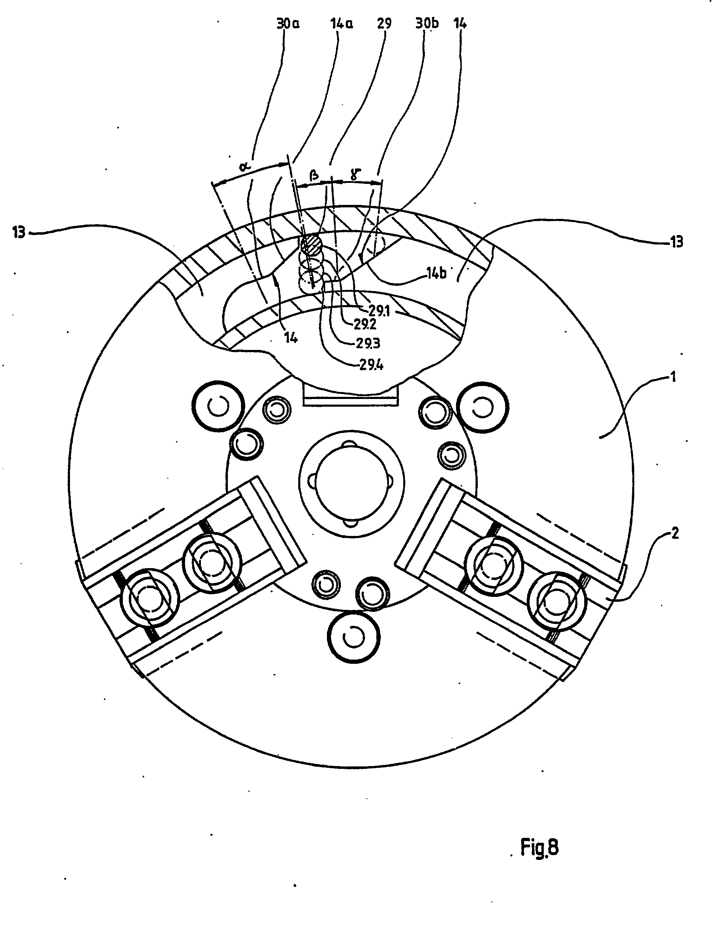

Im Ausführungsbeispiel nach den Fig. 7 bis 9 ist an jeder Grundbacke 2 nur eine einzige Steuerstange 10 vorgesehen. Das Steuerglied 13 ist eine Ringscheibe, die in einer konzentrischen Ringnut 26 des Futterkörpers 1 drehbar um die Futterachse 8 gelagert ist. Der Drehantrieb erfolgt über ein Stellrohr 27 durch einen nicht dargestellten hydraulischen oder pneumatischen Drehkolben. Die Ringnut 26 ist zu den Grundbacken 2 hin offen. An jeder Grundbacke 2 ist die Steuerstange 10 in einer zur Ringnut 26 hin offenen Nut 28 geführt. Die Ringscheibe besitzt auf ihrer den Grundbacken 2 zugewandten Seite die Steuerkurve 14, der die Steuerstange 10 mit einem Anschlagglied 29 anliegt. In der aus Fig. 8 ersichtlichen Drehlage bildet das Steuerglied 13 einen in der Führungsrichtung der Steuerstange 10 verlaufenden freien Durchgang für das Anschlagglied 29. In dieser Drehlage ist also die Spannbewegung der Grundbacke 2 nicht durch das Steuerglied 13 behindert. An diesen freien Durchgang schließt in beiden Drehrichtungen das Steuerglied 13 die Steuerkurve 14 mit je einem Kurvenzweig an, von welchem der Kurvenzweig 14a die Verriegelungsbewegung, der andere Kurvenzweig 14b die Entriegelungsbewegung der Steuerstange steuern. Jeder dieser beiden Kurvenzweige 14a, 14b bildet einen Anschlag 30a, 30b, an dem die Steuerstange 10 in Richtung der Verriegelungsbewegung bzw. Entriegelungsbewegung der Grundbacke 2 festgehalten ist.

Die Funktionsweise dieses Spannfutters läßt sich wie folgt beschreiben: Zur Verriegelung fährt die Grundbacke 2 nach innen, wobei das Anschlagglied 29 der Steuerstange 10 aus der Stellung 29.1 in die Stellung 29.2 gelangt. Als nächstes wird das Steuerglied 13 um den Winkel α nach rechts verdreht, wodurch das Anschlagglied 29 über die Steuerkurve 14a aus der Stellung 29.2 in die Stellung 29.4 verschoben wird. Nun fährt die Grundbacke 2 nach außen, wobei das Anschlagglied 29 und damit die Steuerstange 10 am Anschlag 30a festgehalten werden, so daß die Verbindungszapfen 7 mit der hohen Spannkraft der Grundbacke 2 in die Verriegelungsstellung gedreht werden. Die Backenverbindung ist damit geschlossen. Dreht nun das Steuerglied 13 um den Winkel α nach links in die Ausgangsstellung, sind die freien Spannbewegungen der Grundbacken 2 wieder möglich. - Zur Entriegelung fährt die Grundbacke 2 zunächst nach außen, wodurch das Anschlagglied 29 und entsprechend die Steuerstange 10 in die Stellung 29.3 gelangen. Das Steuerglied 13 dreht nun um den Winkel β nach links, so daß der Anschlag 30b unter das Anschlagglied 29 gelangt. Anschließend fährt die Grundbacke 2 nach innen, wobei das Anschlagglied 29 und damit die Steuerstange 10 am Anschlag 30b gehalten werden, so daß sich die Verbindungszapfen 7 aus ihrer Verriegelungsstellung unter der hohen Spannkraft der Grundbacken 2 lösen. Das Steuerglied 13 dreht nun weiter um den Winkel γ nach links, wodurch das Anschlagglied 29 und damit die Steuerstange 10 über die Steuerkurve 14b von der Stellung 29.3 in die Stellung 29.1 gelangen. Durch diese Verschiebung der Steuerstange 10 schwenken die Verbindungszapfen 7 in ihre der völligen Entriegelung entsprechende Drehstellung und geben die Aufsatzbacke frei. Anschließend kann das Steuerglied 13 um die Winkel β und γ nach rechts in die Ausgangsstellung zurückgedreht werden. .

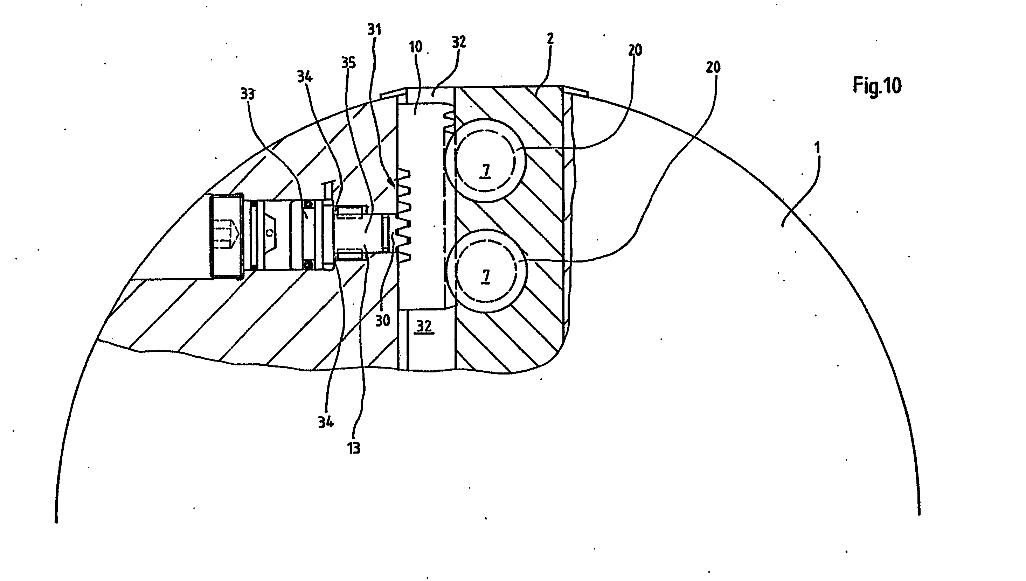

Im Ausführungsbeispiel nach Fig. 10 ist das Steuerglied 13 ein im Futterkörper 1 geführter Riegel, der in der in der Figur gezeigten Verriegelungsstellung mit einem Riegelkopf 30 form- und kraftschlüssig in Riegelaufnahmen 31 der Steuerstange 10 quer zu deren Führungsrichtung eingreift. Im einzelnen ist die Steuerstange 10 in einer zum Futterkörper 1 hin offenen Nut 32 der Grundbacke 2 geführt und auf der offenen Nutseite mit einer die Riegelaufnahmen 31 bildenden Zahnleiste versehen. Der Riegel ist ein in seiner Längsrichtung kraftbetätigt mittels eines hydraulisch oder pneumatisch beaufschlagbaren Kolbens 33 hin und her verschiebbarer zylindrischer Bolzen, der durch seitliche Führungsansätze, die in entsprechenden Nuten 34 des Futterkörpers 1 laufen, gegen Verdrehen um seine Achse 35 gesichert ist, so daß an seiner der Steuerstange 10 zugewandten Stirn als Riegelkopf 30 dienende , in die Zahnleiste passende Querverzahnung stets entsprechend dem Zahnverlauf an der Zahnleiste ausgerichtet ist.

Die Funktionsweise dieser Ausführungsform läßt sich kurz wie folgt beschreiben: Zur Verriegelung fährt die Grundbacke 2 in die äußerste Stellung. Das Steuerglied 13 wird durch den Kraftkolben 33 in die in der Zeichnung dargestellte Eingriffstellung an der Steuerstange 10 bewegt. Anschließend fährt die Grundbacke 2 um den größtmöglichen Spannhub radial nach innen, wobei der Steuerstange 10 durch das Steuerglied 13 festgehalten wird, so daß sich zwischen der Steuerstange 10 und der Grundbacke 2 eine Relativverschiebung ergibt, welche die Verbindungszapfen 7 in dem der Verriegelungsbewegung entsprechenden Drehsinn verdreht. Nun fährt das Steuerglied 13, betätigt durch den Kolben 33, aus dem Eingriff zurück und gibt die Steuerstange 10 frei. In diesem Zustand fährt die Grundbacke 2 in ihre äußere Stellung zurück und nimmt dabei die Steuerstange 10 mit, so daß keine Rückverdrehung der Verbindungszapfen 7 erfolgt. Der beschriebene Ablauf kann nun wiederholt werden, wodurch sich eine weitere Relativverschiebung zwischen Steuerstange 10 und Grundbacke 2 im Sinne einer Verriegelungsbewegung der Verbindungsstange 10 ergibt. Diese Wiederholung wird so oft durchgeführt, bis die Verbindungszapfen 7 aus ihrer Entriegelungslage über 90° in ihre Verriegelungslage gedreht sind. - Der Entriegelungsvorgang erfolgt sinngemäß im umgekehrter Reihenfolge.

**Patentansprüche**

1. Kraftbetätigtes Spannfutter mit durch ein Antriebsglied (4) radial verstellbaren Spannbacken, deren jede aus einer in einem Futterkörper (1) geführten, vom Antriebsglied (4) betätigbaren Grundbacke (2) und einer mit der Grundbacke (2) auswechselbar verbundenen Aufsatzbacke besteht und mindestens einen Verbindungszapfen (7) mit zur Futterachse (8) paralleler Zapfenachse (9) aufweist, der drehbar um die Zapfenachse (9) in der Grundbacke (2) gelagert ist und je nach Drehlage die Backenverbindung zwischen der Grundbacke (2) und der Aufsatzbacke schließt oder öffnet, und wobei mindestens eine quer zur Zapfenachse (9) längsverschieblich in der Grundbacke (2) geführte Steuerstange (10, 10', 10.1, 10.2, 10.1', 10.2') und zwischen der Steuerstange und dem Verbindungszapfen (7) ein sie miteinander koppelndes Getriebe (20, 21) vorgesehen ist, das Verschiebungen der Steuerstange relativ zur Grundbacke in Verdrehungen des Verbindungszapfens (7) und umgekehrt umsetzt, dadurch gekennzeichnet, daß die Führung der Steuerstange (10, 10', 10.1, 10.2, 10.1', 10.2') in der Grundbacke (2) parallel zur Führung der Grundbacke (2) im Futterkörper (1) verläuft, daß für die Steuerstange ein Steuerglied (13) vorgesehen ist, durch das die Steuerstange gegen Verschiebungen in Bezug auf den Futterkörper (1) feststellbar ist, und daß die Grundbacke (2) durch ihr Antriebsglied (4) bei festgestellter Steuerstange zum Verdrehen des Verbindungszapfens (7) verschiebbar ist.

2. Spannfutter nach Anspruch 1, dadurch gekennzeichnet, daß bei zwei Verbindungszapfen (7) je Spannbacke für jeden Verbindungszapfen (7) eine eigene Steuerstange (10.1, 10.2 bzw. 10.1', 10.2') vorgesehen ist, und daß die beiden Steuerstangen (10.1, 10.2 bzw. 10.1', 10.2') in Verschiebungsrichtung durch ein Kraftausgleichsglied (23) miteinander gekoppelt und über das Kraftausgleichsglied (23) durch das den beiden Steuerstangen gemeinsame Steuerglied (13) feststellbar sind (Fig. 4 und 5).

3. Spannfutter nach Anspruch 2, dadurch gekennzeichnet, daß das Kraftausgleichsglied (23) als gleicharmiger Heben ausgebildet ist, der an den Enden seiner Hebelarme gelenkig mit den beiden Steuerstangen (10.1, 10.2 bzw. 10.1', 10.2') verbunden und drehbar um die Hebelmitte an eine parallel zu den Steuerstangen in der Grundbacke (2) geführte Stellstange (24) angeschlossen ist, an der das Steuerglied (13) angreift.

4. Spannfutter nach Anspruch 3, dadurch gekennzeichnet, daß bei immer nur auf Druck beanspruchten Steuerstangen Das Kraftausgleichsglied (23) einerseits mit Drucknasen (23.1) stirnseitig gegen je eine der beiden Steuerstangen (10.1, 10.2 bzw. 10.1', 10.2') und andererseits über eine seine Drehung ermöglichende Zylinderfläche (23.2) gegen die Stellstange (24) abgestützt ist.

5. Spannfutter nach den Ansprüchen 3 oder 4, dadurch gekennzeichnet, daß bei Ausbildung der die Steuerstangen mit den Verbindungszapfen koppelnden Getriebe jeweils als Zahnritzel (20) am Verbindungszapfen (7) und darin eingreifende Zahnleiste (21) an der Steuerstange die beiden Steuerstangen (10.1, 10.2 bzw. 10.1', 10.2') in Richtung der Zapfenachsen (9) unmittelbar aneinander geführt sind und je eine Längsaussparung (25) aufweisen, die an jeder Steuerstange das jeweils nicht mit ihr im Eingriff stehende Zahnritzel (20) über den Verstellweg der Steuerstange aufnimmt.

6. Spannfutter nach Anspruch 1 oder 3, dadurch gekennzeichnet, daß das Steuerglied (13) ein im Futterkörper (1) geführter Riegel ist, der in der Verriegelungsstellung mit einem Riegelkopf (30) form- und kraftschlüssig in Riegelaufnahmen (31) der Steuerstange (10) bzw. Stellstange (24) quer zu deren Führungsrichtung eingreift (Fig. 10).

7. Spannfutter nach Anspruch 6, dadurch gekennzeichnet, daß die Steuerstange (10) bzw. Stellstange (24) in einer zum Futterkörper (1) hin offenen Nut (32) der Grundbacke (2) geführt und auf der offenen Nutseite mit einer die Riegelaufnahmen (31) bildenden Zahnleiste versehen ist, und daß der Riegel ein in seiner Längsrichtung kraftbetätigt hin und her verschiebbarer Bolzen ist, der an seiner der Steuerstange (10) bzw. Stellstange (24) zu gewandten Stirn als Riegelkopf (30) eine in die Zahnleiste passende Querverzahnung aufweist.

8. Spannfutter nach Anspruch 1 oder 3, dadurch gekennzeichnet, daß das Steuerglied (13) als ein im Futterkörper (1) quer zur Führungsrichtung der Steuerstange (10, 10', 10.1, 10.2, 10.1', 10.2') bzw. Stellstange (24) geführtes, kraftbetätigt bewegbares Steuerglied ausgebildet ist, das eine sich längs seines Stellweges erstreckende Steuerkurve (14) aufweist, die einen Anschlag für die Steuerstange bzw. Stellstange bildet und mittels der bei der Verstellung des Steuergliedes (13) die Steuerstange bzw. Stellstange in Bezug auf die von ihrem Antriebsglied (4) festgehaltene Grundbacke (2) verschiebbar ist.

9. Spannfutter nach Anspruch 8, dadurch gekennzeichnet, daß das Steuerglied (13) eine Ringscheibe ist, die in einer konzentrischen Ringnut (26) des Futterkörpers (1) drehbar um die Futterachse (8) gelagert ist, daß die Ringnut (26) zu den Grundbacken (2) hin offen ist, daß an jeder Grundbacke (2) die Steuerstange (10) bzw. Stellstange (24) in einer zur Ringnut (26) hin offenen Nut (28) geführt ist, und daß die Ringscheibe auf ihrer den Grundbacken zugewandten Seite die Steuerkurve (14) aufweist, der die Steuerstange (10) bzw. Stellstange (24) mit einem Anschlagglied (29) anliegt (Fig. 7 bis 9).

10. Spannfutter nach Anspruch 9, dadurch gekennzeichnet, daß das Steuerglied (13) in einer vorgegebenen Drehlage einen in der Führungsrichtung der Steuerstange (10) bzw. Stellstange (24) verlaufenden freien Durchgang für das Anschlagglied (29) bildet, daß an diesen freien Durchgang in beiden Drehrichtungen des Steuerglieds (13) die Steuerkurve (14) mit je einem Kurvenzweig (14a, 14b) anschließt, von welchen der eine die Verriegelungsbewegung, der andere die Entriegelungsbewegung der Steuerstange (10) bzw. Stellstange (24) steuert, und daß jeder dieser beiden Kurvenzweige (14a, 14b) eine Anschlagfläche (30a, 30b) aufweist, an der die Steuerstange (10) bzw. Stellstange (24) in Richtung der Verriegelungsbewegung bzw. Entriegelungsbewegung der Grundbacke (2) festgehalten ist.

11. Spannfutter nach Anspruch 8, dadurch gekennzeichnet, daß das Steuerglied (13) ein im Futterkörper (1) axial und konzentrisch geführter Steuerkolben ist, daß für jede Grundbacke (2) zwei sich am Verbindungszapfen (7) gegenüber liegende, sich zueinander gegenläufig bewegende Steuerstangen (10, 10') bzw. Stellstangen vorgesehen sind, und daß das Steuerglied (13) für jede der beiden Steuerstangen (10, 10') bzw. Stellstangen eine eigene Steuerkurve (14, 14') aufweist, welchen die eine der beiden Steuerstangen bzw. Stellstangen nur beim Verriegelungsvorgang, die andere nur beim Entriegelungsvorgang mit jeweils ihrem radial inneren Stangenende anliegt (Fig. 1 bis 3).

12. Spannfutter nach Anspruch 11, dadurch gekennzeichnet, daß die Steuerkurven (14, 14') und die von ihnen gebildeten Anschläge (14.1, 14.1'), welchen die jeweilige Steuerstange (10, 10') bzw. Stellstange bei der radial einwärts gerichteten Verriegelungsbewegung oder Entriegelungsbewegung der Grundbacke (2) anliegt, einen radialen Abstand von der Futterachse (8) besitzen, der überall etwas kleiner ist als der beim Werkstückspannen auftretende kleinste Abstand der Grundbacken (2) bzw. Steuerstangen (10, 10') von der Futterachse (8).

13. Spannfutter nach Anspruch 11 oder 12, dadurch gekennzeichnet, daß das Steuerglied (13) im Futterkörper (1) mit einem radialen Verschiebungsspiel (17) zum Kraftausgleich zwischen den Steuerstangen (10, 10') bzw. Stellstangen aller Grundbacken (2) angeordnet und nur in seiner der völlig offenen Backenverbindung entsprechenden Axialstellung in eine das Radialspiel ausschaltende Zentrierbohrung (19) im Futterkörper (1) verschoben ist.

14. Spannfutter nach einem der Ansprüche 11 bis 13, dadurch gekennzeichnet, daß der Anschlagfläche (14.1') an der Steuerkurve (14') für den Verriegelungsvorgang an der Steuerkurve (14) für den Entriegelungsvorgang eine Ausnehmung (14.2) zum freien Eintritt des ihr zugeordneten Steuer- bzw. Stellstangenendes entspricht, und daß die an diese Ausnahmung (14.2) anschließende Anschlagfläche (14.1) der Steuerkurve (14) um mindestens denjenigen Hub (15) radial höher ist, den die Grundbacke (2) zum Öffnen der Backenverbindung ausführen muß.

15. Spannfutter nach einem der Ansprüche 11 bis 14, dadurch gekennzeichnet, daß die Steuerkurven (14, 14') als gegen die Futterachse (8) geneigte ebene Keilflächen ausgebildete Abschnitte (14.3, 14.3') aufweisen, welchen die Steuer- bzw. Stellstangenenden mit entsprechend geneigten Schrägflächen (18, 18') anliegen.

**Revendications**

1. Mandrin de serrage actionné par une source d'énergie extérieure, comprenant des mâchoires de serrage déplaçables dans le sens radial par un organe moteur (4), dont chacune est constituée d'une mâchoire de base (2) guidée dans le corps de mandrin (1) et pouvant être actionnée par l'organe moteur (4) et d'une mâchoire rapportée reliée de manière interchangeable à la mâchoire de base (2) et présentant au moins un tourillon de raccordement (7) dont l'axe (9) est orienté parallèlement à l'axe (8) du mandrin, qui est monté dans la mâchoire de base (2) de façon à pouvoir tourner autour de l'axe (9) du tourillon et ferme ou ouvre la liaison entre la mâchoire de base (2) et la mâchoire rapportée en fonction de la position de rotation, et dans lequel sont prévus au moins une tige de commande (10, 10', 10.1, 10.2, 10.1', 10.2') guidée dans la mâchoire de base (2) et pouvant être déplacée dans le sens longitudinal, transversalement à l'axe (9) du tourillon et, entre la tige de commande et le tourillon de raccordement (7), un engrenage (20, 21) qui assure le couplage entre ladite tige de commande et ledit tourillon de raccordement et transforme les déplacements de la tige de commande par rapport à la mâchoire de base en mouvements de rotation du tourillon de raccordement (7) et inversement, caractérisé en ce que le guidage de la tige de commande (10, 10', 10.1, 10.2, 10.1', 10.2') dans la mâchoire de base (2) se fait parallèlement au guidage de la mâchoire de base (2) dans le corps de mandrin (1); qu'il est prévu pour la tige de commande un organe de commande (13) par lequel ladite tige de commande peut être bloquée contre des déplacements par rapport au corps de mandrin (1); et que, la tige de commande étant bloquée, la mâchoire de base (2) peut être déplacée par son organe moteur (4) pour la rotation du tourillon de raccordement (7).

2. Mandrin de serrage selon la revendication 1, caractérisé en ce que, en présence de deux tourillons de raccordement (7) par mâchoire de serrage, une tige de commande particulière (10.1, 10.2 et respectivement 10.1', 10.2') est prévue pour chacun des tourillons de raccordement (7); et que les deux tiges de commande (10.1, 10.2 et respectivement 10.1', 10.2') sont couplées entre elles dans le sens du déplacement par un organe d'équilibrage des forces (23) et peuvent être bloquées, par l'intermédiaire dudit organe d'équilibrage des forces (23), par l'organe de commande (13) commun aux deux tiges de commande (fig. 4 et 5).

3. Mandrin de serrage selon la revendication 2, caractérisé en ce que l'organe d'équilibrage des forces (23) est conformé en levier à bras égaux dont les extrémités des bras de levier sont articulées avec les deux tiges de commande (10.1, 10.2 et respectivement 10.1', 10.2') et qui est raccordé de façon à pouvoir tourner autour du centre du levier, à une tige de réglage (24) guidée dans la mâchoire de base (2), parallèlement aux tiges de commande, et sur laquelle agit l'organe de commande (13).

4. Mandrin de serrage selon la revendication 3, caractérisé en ce que, lorsque les tiges de commande sont toujours sollicitées uniquement en compression, l'organe d'équilibrage des forces (23) prend appui d'une part avec des talons de compression (23.1), du côté frontal, sur respectivement l'une des deux tiges de commande (10.1, 10.2 et respectivement 10.1', 10.2') et, d'autre part, par l'intermédiaire d'une surface cylindrique (23.2) rendant possible sa rotation, sur la tige de réglage (24).

5. Mandrin de serrage selon l'une des revendications 3 ou 4, caractérisé en ce que, dans le cas d'une conformation des engrenages couplant les tiges de commande avec les tourillons de raccordement en pignon (20) sur le tourillon de raccordement (7) et respectivement en crémaillère (21) sur la tige de commande en prise avec ledit pignon, les deux tiges de commande (10.1, 10.2 et respectivement 10.1', 10.2') sont guidées immédiatement l'une à côté de l'autre dans la direction des axes (9) des tourillons et qu'elles présentent chacune un évidement longitudinal (25) qui reçoit sur chaque tige de commande, sur la distance de déplacement de la tige de commande, le pignon (20) qui n'est respectivement pas en prise avec ladite tige de commande.

6. Mandrin de serrage selon l'une des revendications 1 ou 3, caractérisé en ce que l'organe de commande (13) est un verrou guidé dans le corps de mandrin (1) et qui, dans la position de verrouillage, s'engage avec une tête de verrou (30), à engagement positif et par adhérence, dans des logements de verrou (31) de la tige de commande (10) et respectivement de la tige de réglage (24), transversalement à la direction de guidage de celle-ci (fig. 10).

7. Mandrin de serrage selon la revendication 6, caractérisé en ce que la tige de commande (10) et respectivement la tige de réglage (24) est guidée dans une rainure (32) de la mâchoire de base (2) ouverte en direction du corps de mandrin (1) et munie, du côté de l'ouverture de la rainure, d'une crémaillère formant l'un des logements de verrou (31); et que le verrou est constitué par un boulon pouvant être déplacé par une force extérieure dans les deux sens, dans la direction de son extension longitudinale, et présentant, sur sa face frontale dirigée vers la tige de commande (10) et respectivement la tige de réglage (24), une denture transversale adaptée à la crémaillère et servant de tête de verrou (30).

8. Mandrin de serrage selon l'une des revendications 1 ou 3, caractérisé en ce que l'organe de commande (13) est conformé en organe de réglage guidé dans le corps de mandrin (1), transversalement à la direction de guidage de la tige de commande (10, 10', 10.1, 10.2, 10.1', 10.2') et respectivement de la tige de réglage (24) et pouvant être déplacé par une source d'énergie extérieure, lequel organe de réglage comprend une came de commande (14) s'étendant le long de son trajet de réglage et formant une butée pour la tige de commande et respectivement la tige de réglage et au moyen de laquelle la tige de commande et respectivement la tige de réglage peut être déplacée, lors du déplacement de l'organe de commande (13), par rapport à la mâchoire de base (2) retenue par son organe moteur (4).

9. Mandrin de serrage selon la revendication 8, caractérisé en ce que l'organe de commande (13) est un disque annulaire qui est monté dans une rainure annulaire (26) concentrique du corps de mandrin (1) de façon à pouvoir tourner autour de l'axe (8) du mandrin; que la rainure annulaire (26) est ouverte en direction des mâchoires de base (2); que sur chaque mâchoire de base (2), la tige de commande (10) et respectivement la tige de réglage (24) est guidée dans une rainure (28) ouverte en direction de la rainure annulaire (26); et que le disque annulaire comporte, sur sa face dirigée vers les mâchoires de base, la came de commande (14) contre laquelle la tige de commande (10) et respectivement la tige de réglage (24) est appliquée avec un élément de butée (29) (fig. 7 à 9).

10. Mandrin de serrage selon la revendication 9, caractérisé en ce que, dans une position de rotation prédéterminée, l'organe de commande (13) forme, dans la direction de guidage de la tige de commande (10) et respectivement de la tige de réglage (24), un passage libre pour l'élément de butée (29); que la came de commande (14) est raccordée à ce passage libre, dans les deux sens de rotation de l'organe de commande (13), avec respectivement une section de came (14a, 14b) dont l'une commande le mouvement de verrouillage et l'autre le mouvement de déverrouillage de la tige de commande (10) et respectivement de la tige de la tige de réglage (24); et que chacune de ces deux sections de came (14a, 14b) présente une surface d'arrêt (30a, 30b) sur laquelle la tige de commande (10) et respectivement la tige de réglage (24) est retenue dans la direction du mouvement de verrouillage et respectivement du mouvement de déverrouillage de la mâchoire de base (2).

11. Mandrin de serrage selon la revendication 8, caractérisé en ce que l'organe de commande (13) est constitué par un piston de commande guidé axialement et concentriquement dans le corps de mandrin (1); qu'il est prévu pour chaque mâchoire de base (2) deux tiges de commande (10, 10') et respectivement deux tiges de réglage situées face à face sur le tourillon de raccordement (7) et se déplaçant en sens opposé l'une par rapport à l'autre; et que l'organe de commande (13) présente pour chacune des deux tiges de commande (10, 10') et respectivement de deux tiges de réglage une came de commande particulière (14, 14'), les deux tiges de commande et respectivement les deux tiges de réglage étant appliquées avec leurs extrémités radialement intérieures contre lesdites cames de commande, à savoir l'une uniquement lors de l'opération de verrouillage et l'autre uniquement lors de l'opération de déverrouillage (fig. 1 à 3).

12. Mandrin de serrage selon la revendication 11, caractérisé en ce que les cames de commande (14, 14') et les butées (14.1, 14.1') formées par celles-ci et contre lesquelles est appliquée la tige de commande (10, 10') et respectivement la tige de réglage considérée lors du mouvement de verrouillage ou de déverrouillage de la mâchoire de base (2) dirigé radialement vers l'intérieur, se situent à une distance radiale de l'axe (8) du mandrin qui est partout légèrement inférieure à la distance minimale entre les mâchoires de base (2) et respectivement les tiges de commande (10, 10') et l'axe (8) du mandrin rencontrée lors de la fixation des pièces à usiner.

13. Mandrin de serrage selon l'une des revendications 11 ou 12, caractérisé en ce que l'organe de commande (13) est disposé dans le corps de mandrin (1) avec un jeu de translation radial (17) pour l'équilibrage des forces entre les tiges de commande (10, 10') et respectivement les tiges de réglage de toutes les mâchoires de base (2); et que c'est seulement dans sa position axiale correspondant à l'ouverture complète de la liaison entre les mâchoires (2) qu'il est déplacé dans un alésage de centrage (19) dans le corps de mandrin (1) qui supprime le jeu radial.

14. Mandrin de serrage selon l'une quelconque des revendications 11 à 13, caractérisé en ce qu'à la surface d'arrêt (14.1') sur la came de commande (14') pour le verrouillage correspond, sur la came de commande (14) pour le déverrouillage, un évidement (14.2) pour l'entrée libre de l'extrémité de la tige de commande et respectivement de la tige de réglage qui lui est associée; et que la surface d'arrêt (14.1) de la came de commande (14) se raccordant à cet évidement (14.2) présente une hauteur radiale supérieure d'au moins la course (15) que la mâchoire de base (2) doit effectuer pour l'ouverture de la liaison entre les mâchoires.

15. Mandrin de serrage selon l'une quelconque des revendications 11 à 14, caractérisé en ce que les cames de commande (14, 14') présentent des sections (14.3, 14.3') conformées en surfaces de clavette planes inclinées par rapport à l'axe (8) du mandrin, contre lesquelles les extrémités des tiges de commande et respectivement des tiges de réglage sont appliquées avec des surfaces obliques (18, 18') présentant une inclinaison correspondante.

**Claims**

1. Power-operated clamping chuck with clamping jaws which are radially adjustable by means of a drive member (4), each clamping jaw consisting of a base jaw (2) guided in a chuck body (1) and being actuatable by the drive member (4) and of a supporting jaw exchangeably connected to the base jaw (2), and each clamping jaw having at least one connecting pin (7) with a pin axis (9) parallel to the chuck axis (8), the pin being mounted in the base jaw (2) rotatably about the pin axis (9) and closing or opening the jaw connection between the base jaw (2) and the supporting jaw according to its rotational position, and wherein at least one control rod (10, 10', 10.1, 10.2, 10.1', 10.2'), which lies transverse to the pin axis (9) and is guided longitudinally displaceably in the base jaw (2), is provided, and between the control rod and the connecting pin (7) a gear system (20, 21) is provided to couple them together, which converts displacements of the control rod relative to the base jaw into rotations of the connecting pin (7) and vice versa, characterised in that the guide of the control rod (10, 10', 10.1, 10.2, 10.1', 10.2') in the base jaw (2) runs parallel to the guide of the base jaw (2) in the guide body (1), in that a control member (13) is provided for the control rod, by means of which the control rod is lockable against movements relative to the chuck body (1), and in that the base jaw (2) is displaceable by means of its drive member (4), when the control rod is locked, in order to rotate the connecting pin (7).

2. Clamping chuck according to claim 1, characterised in that, in the case of two connecting pins (7) for each clamping jaw, an individual control rod (10.1, 10.2 or 10.1', 10.2') is provided for each connecting pin (7), and in that the two control rods (10.1, 10.2 or 10.1', 10.2') are coupled together in the displacement direction by a power equalisation member (23) and are lockable via the power equalisation member (23) by means of the control member (13) common to both control rods (Fig. 4 and 5).

3. Clamping chuck according to claim 2, characterised in that the power equalisation member (23) is formed as a lever having equal arms, which is connected at the ends of its lever arms pivotably to the two control rods (10.1, 10.2 or 10.1', 10.2') and is attached rotatably about the lever centre to an adjusting rod (24) guided in the base jaw (2) parallel to the control rods, with which adjusting rod (24) the control member (13) engages.

4. Clamping chuck according to claim 3, characterised in that in the case of control rods which are only ever stressed by pressure, the power equalisation member (23) bears on the one side with pressure lugs (23.19) against the end of each of the two control rods (10.1, 10.2 or 10.1', 10.2') and on the other side bears against the adjusting rod (24) via its cylindrical surface (23.2) which permits rotation.

5. Clamping chuck according to claims 3 or 4, characterised in that when the gear system coupling the control rods to the connecting pins is formed in each case as a pinion (20) on the connecting pin (7) and a rack (21) engaging therein on the control rod, the two control rods (10.1, 10.2 or 10.1', 10.2') are guided directly on one another in the direction of the pin axes (9) and each have a longitudinal slot (25), which on each control rod receives the pinion (20) respectively not engaged therewith over the path of movement of the control rod.

6. Clamping chuck according to claim 1 or 3, characterised in that the control member (13) is a bolt guided in the chuck body (1), which in the locked position engages with a bolt head (30) both positively and non-positively in bolt seats (31) in the control rod (10) or adjusting rod (24) transversely to the guide direction thereof (Fig. 10).

7. Clamping chuck according to claim 6, characterised in that the control rod (10) or adjusting rod (24) is guided in a groove (32) of the base jaw (2) which is open with respect to the chuck body (1) and is provided on the open side of the groove with a rack forming the bolt seats (31), and in that the bolt is a pin which may move to and for in its longitudinal direction in a power-operated manner, and which has as a bolt head (30), on its end facing the control rod (10) or adjusting rod (24), transverse toothing fitting into the rack.

8. Clamping chuck according to claim 1 or 3, characterised in that the control member (13) is formed as a control member movable in a power-operated manner and guided in the chuck body (1) transverse to the guide direction of the control rod (10, 10', 10.1, 10.2, 10.1', 10.2') or adjusting rod (24), and has a control cam (14) extending along its path of adjustment, the cam forming a stop for the control rod or adjusting rod and by means of which cam, in the case of adjustment of the control member (13) the control rod or adjusting rod is movable relative to the base jaw (2) held by its drive member (4).

9. Clamping chuck according to claim 8, characterised in that the control member (13) is an annular disk, which is mounted rotatably about the chuck axis (8) in a concentric annular groove (26) in the chuck body (1), in that the annular groove (26) is open with respect to the base jaw (2), in that on each base jaw (2) the control rod (10) or adjusting rod (24) is guided in a groove (28) which is open with respect to the annular groove (26), and in that the annular disk has on its side facing the base jaws the control cam (14), which abuts with a stop member (29) the control rod (10) or adjusting rod (24) (Fig. 7 to 9).

10. Clamping chuck according to claim 9, characterised in that in a prescribed rotary position the control member (13) forms for the stop member (29) a free passage extending in the guide direction of the control rod (10) or adjusting rod (24), in that in both rotation directions of the control member (13) the control cam (14) abuts this free passage with a respective cam branch (14a, 14b), one of which controls the locking movement, and the other of which controls the unlocking movement of the control rod (10) or adjusting rod (24), and in that each of these two cam branches (14a, 14b) has a stop face (30a, 30b), on which the control rod (10) or adjusting rod (24) is held in the direction of the locking movement or unlocking movement of the base jaw (2).

11. Clamping chuck according to claim 8, characterised in that the control member (13) is a control piston guided axially and concentrically in the chuck body (1), in that for each base jaw (2) two control rods (10, 10') are provided, lying opposite one another on the connecting pin (7) and moving in opposite directions to one another, and in that the control member (13) has for each of the two control rods (10, 10') or adjusting rods its own control cam (14, 14'), which one of the two control rods or adjusting rods abuts only in the locking process, and the other abuts only in the unlocking process, in each case with their radially inner rod end (Fig. 1 to 3).

12. Clamping chuck according to claim 11, characterised in that the control cams (14, 14') and the stops (14.1, 14.1') formed thereby, which the respective control rod (10, 10') or adjusting rod abuts in the radially inward locking movement of the base jaw (2), have a radial distance from the chuck axis (8) which is everywhere slighty smaller than the smallest distance of the base jaws (2) or control rods (10, 10') from the chuck axis (8) arising when a workpiece is clamped.

13. Clamping chuck according to claim 11 or 12, characterised in that the control member (13) is mounted in the chuck body (1) with a radial adjustment play (17) for power equalisation between the control rods (10, 10') or adjusting rods of all base jaws (2), and is moved into a centring bore (19) in the chuck body (1) for changing the radial play only when in its axial position corresponding to the completely open jaw connection.

14. Clamping chuck according to one of claims 11 to 13, characterised in that a recess (14.2) for the free entry of the associated control or adjusting rod end corresponds to the stop face (14.1') on the control cam (14') for the locking process and on the control cam (14) for the unlocking process, and in that the stop face (14.1) of the control cam (14) adjoining this recess (14.2) is radially higher by at least the same stroke (15) which the base jaw (2) has to carry out in order to release the jaw connection.

15. Clamping chuck according to one of claims 11 to 14, characterised in that the control cams (14, 14') have sections (14.3, 14.3') formed as wedge faces inclined towards the chuck axis (8), which the control or adjusting rod ends abut with correspondingly inclined oblique faces (18, 18').

Fig. 1

EP 0 278 111 B1

Fig. 2

Fig.3.1  Fig.3.2  Fig.3.3  Fig.3.4  Fig.3.5  Fig.3.6

Fig.3

Fig.6

Fig.4

Fig.5

EP 0 278 111 B1

Fig.9

Fig.7

Fig. 8

Fig.10